(19) Europäisches Patentamt
European Patent Office
Office européen des brevets

(11) **EP 3 182 062 B1**

(12) **EUROPÄISCHE PATENTSCHRIFT**

(45) Veröffentlichungstag und Bekanntmachung des Hinweises auf die Patenterteilung:
**22.09.2021 Patentblatt 2021/38**

(21) Anmeldenummer: **15199884.6**

(22) Anmeldetag: **14.12.2015**

(51) Int Cl.:
*G01B 21/04* (2006.01)   *G01B 9/02* (2006.01)

(54) **KALIBRIERUNG EINES INTERFEROMETERS**

CALIBRATION OF AN INTERFEROMETER

ÉTALONNAGE D'UN INTERFÉROMÈTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.06.2017 Patentblatt 2017/25**

(73) Patentinhaber: **HAAG-STREIT AG**
**3098 Köniz (CH)**

(72) Erfinder:
• **Kesselring, Pascal**
  **3011 Bern (CH)**
• **Robledo, Lucio**
  **3013 Bern (CH)**

(74) Vertreter: **Keller Schneider**
**Patent- und Markenanwälte AG (Bern)**
**Eigerstrasse 2**
**Postfach**
**3000 Bern 14 (CH)**

(56) Entgegenhaltungen:
**EP-A1- 2 479 546    EP-A1- 2 633 797**
**JP-A- 2014 190 800**

• ORTIZ S ET AL: "Optical coherence tomography for quantitative surface topography", APPLIED OPTICS, OPTICAL SOCIETY OF AMERICA, WASHINGTON, DC; US, Bd. 48, Nr. 35, 10. Dezember 2009 (2009-12-10), Seiten 6708-6715, XP001550431, ISSN: 0003-6935, DOI: 10.1364/AO.48.006708
• MINGTAO ZHAO: "3D refraction correction and extraction of clinical parameters from spectral domain optical coherence tomography of the cornea", OPTICS EXPRESS, Bd. 18, Nr. 9, 26. April 2010 (2010-04-26), XP002757695,

EP 3 182 062 B1

**Beschreibung**

**Technisches Gebiet**

Die Erfindung betrifft ein Verfahren zur Kalibrierung eines Interferometers mit einem Strahlengang für einen Messstrahl, wobei mindestens eine den Messstrahl mindestens teilweise reflektierende Ebene in den Strahlengang eingeführt ist. Weiter betrifft die Erfindung einen Prüfkörper zum Kalibrieren eines Interferometers sowie ein Interferometer mit einem Prüfkörper.

**Stand der Technik**

In der Interferometrie werden anhand von Überlagerungen von Wellen Messungen durchgeführt. Es sind dazu unterschiedliche Typen von Interferometern bekannt. Typische Vertreter sind die Mach-Zehnder- und die Michelson-Interferometer.

Mit OCT-Scannern können auch streuende Materialien in der Tiefe vermessen werden. Dies wird durch den Einsatz von Licht geringer Kohärenzlänge erreicht. In der 3D-OCT-Messung wird eine eindimensionale axiale Messung mit einer zweidimensionalen lateralen Ablenkung kombiniert, womit präzise räumliche Zuordnungen der Messdaten vorgenommen werden können. Die Messsysteme müssen eine hohe absolute Genauigkeit aufweisen, um gute Messresultate gewährleisten zu können. Dies betrifft zum Beispiel die laterale Position des Messstrahls, respektive die exakte laterale Verschiebung des Messstrahls durch die Ablenkungseinrichtung. Die hohe Präzision wird neben der Konstruktiven Mittel auch durch geeignete Kalibriermethoden erreicht.

Um ein Interferometer zu kalibrieren sind unterschiedliche Techniken bekannt. Typischerweise werden dazu Messobjekte eingesetzt, deren Geometrien als bekannt angenommen werden. Wird nun eine Vermessung des Messobjekts mit dem Interferometer durchgeführt, so kann aufgrund des Unterschieds zwischen den Messdaten und den bekannten Daten des Messobjekts das Interferometer justiert werden.

Die Publikation von Mingtao Zhao et. al. mit dem Titel "3D refraction correction and extraction of clinical parameters from spectral domain optical coherence tomography of the cornea" (26. April 2010/Vol. 18, No. 9/Optics Express) zeigt eine Kalibrierung eines OCT-Scanners, wobei eine Ebene mit 25 $\mu$m-Targets vermessen wird. Aufgrund der gemessenen axialen Abstände der Targets und den bekannten Erhebungen respektive Vertiefungen der Targets kann die Kalibrierung des OCT-Scanners vorgenommen werden.

Weiter zeigt die Sergio Ortiz et. al. mit dem Titel "Optical coherence tomography for quantitative surface topography" (10. Dezember 2009, Applied Optics/Vol. 48, No. 35) eine Kalibrierung eines OCT-Scanners mittels eines optischen Gitters. Für die Kalibration wird eine flache Platte mit diffuser Oberfläche eingesetzt, welche ein schwarzes Gitter auf weissem Grund aufweist.

Die EP 2 633 797 A1 (Olympus Corp.; Olympus Medical Systems Corp.) beschreibt einen OCT-Scanner mit welchem ein Lichtstrahl auf ein Messziel gerichtet werden kann und anhand der gemessenen Lichtreflektion oder Lichtstreuung ein Zustand des Messzieles bestimmt werden kann. Über eine Umschaltvorrichtung wird Licht auf eine Kalibrationsebene geleitet, die dieses reflektiert und zu einer optischen Detektionseinheit leitet. Eine Steuerungseinheit kann anhand dieser Kalibrationsmessung eine Fehlfunktion des Messgeräts feststellen.

Die EP 2 479 546 A1 (Howard Hughes Medical Institute) beschreibt ein Verfahren und eine Vorrichtung zum Fokussieren eines Lichtstrahls durch ein streuendes Medium, wobei eine Wellenfront des Lichtstrahls gemessen und korrigiert wird. Zwei Lichtstrahlen, welche eine unterschiedliche Frequenz aufweisen, werden zu einem Interferenzstrahl gebündelt und dieser Interferenzstrahl wird anschliessend auf das streuende Medium gerichtet. Ein erster Lichtstrahl wird über einen Scanner geleitet, welcher mittels zweier beweglicher Spiegel den ersten Lichtstrahl in der X- und der Y-Ebene scannen kann. Bei einer Kalibration der Vorrichtung werden die Spiegel bewegt und dabei stets der resultierende Interferenzstrahl mittels eines Kalibrationsdetektors gemessen.

JP 2014190800 A beschreibt ein Verfahren zur geometrischen Kalibrierung eines OCT-Scanners, wobei eine Kalibrierplatte manuell unter mehreren, nicht genau definierten Winkeln verschwenkt wird und jeweils Punkte auf der Kalibrierplatte mit dem OCT-Scanner und mit einer Kamera vermessen werden.

Nachteilig an den bekannten Systemen ist, dass die Interferometer nicht hinreichend genau kalibriert werden können. Weiter werden gewisse Fehlerquellen, welche bei einem Interferometer auftauchen können, nicht berücksichtigt. Insbesondere werden im Allgemeinen nur einzelne Stützpunkte exakt vermessen, zwischen welchen lediglich interpoliert wird.

**Darstellung der Erfindung**

Aufgabe der Erfindung ist es, eine dem eingangs genannten technischen Gebiet zugehörendes Verfahren zur Kalibrierung eines Interferometers zu schaffen, welches eine präzise Kalibrierung unter Berücksichtigung mehrerer Fehlerquellen ermöglicht. Eine weitere Aufgabe der Erfindung ist es, einen entsprechenden Prüfkörper sowie ein Interferometer umfassend den Prüfkörper bereitzustellen.

Die Lösung der Aufgabe ist durch die Merkmale des Anspruchs 1 definiert. Gemäss der Erfindung ist eine Normale einer ersten Ebene zu einem auf die erste Ebene auftretenden Messstrahl um einen ersten Winkel verschwenkt, und es werden die folgenden Schritte ausgeführt:

    a. interferometrisches Messen eines ersten axialen Abstandes eines ersten Punktes auf der ersten Ebene mit dem Messstrahl;

b. interferometrisches Messen eines zweiten axialen Abstandes eines zweiten Punktes auf einer der mindestens einen Ebene mit dem Messstrahl, wobei der zweite Punkt zum ersten Punkt beabstandet ist.

Die Aufgabe wird ebenfalls durch ein Interferometer gemäß den Ansprüchen 9 und 16 gelöst. Ein Interferometer mit einem Strahlengang, insbesondere einen OCT-Scanner, umfasst einen Prüfkörper zur Kalibrierung des Interferometers, wobei der Prüfkörper im Strahlengang angeordnet ist und mindestens eine erste Ebene zum zumindest teilweisen Reflektieren eines Messstrahls des Interferometers aufweist. Eine Normale der ersten Ebene ist dabei zu einem auf die Ebene auftreffenden Strahlengang um einen ersten Winkel verschwenkt.

Unter dem Begriff Kalibrierung wird die Ermittlung von Daten verstanden, welche einen Rückschluss auf die absolute Genauigkeit, insbesondere die tatsächliche laterale Position sowie gegebenenfalls die Richtung des Messstrahls des zu kalibrierenden Interferometers erlauben. Anhand dieser Daten kann das Interferometer einerseits mechanisch kalibriert und anderseits können zukünftige Messdaten mit Hilfe dieser Daten korrigiert respektive bereinigt werden.

Das Interferometer umfasst vorzugsweise eine Lichtquelle, einen Probenarm, einen Referenzarm und einen Detektor, sowie eine Ablenkeinheit zum Ablenken des Messstrahls in einer Ebene rechtwinklig zur Messstrahlrichtung.

Unter dem Begriff OCT wird ein optischer Kohärenztomograph verstanden. Dabei wird Licht mit Hilfe eines Interferometers zur Entfernungsmessung streuender Materialien eingesetzt. Solche Vorrichtungen sind dem Fachmann bekannt.

Mit dem Messstrahl des OCT's wird ein zu untersuchendes Objekt, zum Beispiel ein Auge, ein Prüfkörper zur Kalibrierung des OCT's und dergleichen vermessen. Der Messstrahl tastet die Oberfläche des Objekts ab, womit ein Tiefenprofil erhalten wird. Typischerweise wird dazu der Messstrahl lateral in der x,y-Ebene verfahren, um das Objekt punktweise abzutasten. Die Abstände zum Objekt werden in z-Richtung gemessen.

Der Begriff Ebene wird nachfolgend im topographischen Sinne verstanden, d.h. eine Ebene weist zumindest eine zweidimensionale, ebene Fläche auf. Prinzipiell gilt für die vorliegende Erfindung bereits eine zweidimensionale Grenzebene zwischen zwei Medien mit unterschiedlichen optischen Dichten respektive Brechungsindizes als Ebene. Die Ebene dient dazu, mindestens einen Teil des Messstrahls zu reflektieren, so dass mit dem Interferometer ein Abstand zu dieser Ebene gemessen werden kann. Vorzugsweise handelt es sich bei der respektive den Ebenen jedoch um flächige respektive plattenförmige Reflektoren mit im Vergleich zur Reflektionsfläche geringer Dicke.

Die Ebene ist für den Messstrahl zumindest teilweise reflektierend ausgebildet, wobei die Reststrahlung des Messstrahls durch die Ebene absorbierbar oder transmittierbar sein kann.

Der Begriff der Normalen wird im geometrischen Sinne als Gerade, welche senkrecht respektive lotrecht auf der Ebene steht, verstanden.

Der Messstrahl trifft zur Normalen der ersten Ebene verschwenkt auf der ersten Ebene auf und wird von dieser mindestens teilweise reflektiert. Anders ausgedrückt trifft der Messstrahl mit seiner Auftreffrichtung nicht lotrecht auf die Ebene auf, da diese um eine Achse ausserhalb der z-Achse verschwenkt ist. Vorzugsweise ist die Ebene um eine x-Achse respektive um eine y-Achse verschwenkt oder verschwenkbar. Die Ebene kann auch um beide Achsen, sowohl die x-Achse als auch die y-Achse verschwenkbar sein. Weiter können auch mehrere Ebenen vorgesehen sein, wovon eine um die x-Achse und die andere um die y-Achse verschwenkt ist. Anderseits müssen die beiden Achsen nicht zwingend lotrecht zueinander ausgerichtet sein.

Die Ebene, der erste Winkel und der Messstrahl sind derart ausgebildet und angeordnet, dass zumindest ein Teil des durch die erste Ebene reflektierten Messstrahls in Auftreffrichtung reflektiert oder gestreut wird, so dass ein Abstand interferometrisch bestimmt werden kann. Der erste Winkel für die Berechnung der Kalibrierung, wird vorzugsweise als bekannt vorausgesetzt - anderseits kann mit einem kalibrierten Interferometer auch der Winkel der Ebene kalibriert respektive bestimmt werden.

Unter dem Begriff des axialen Abstandes wird ein Abstand respektive eine Distanz in Richtung des Messstrahls verstanden. Der Abstand bezeichnet, soweit nichts anderes festgehalten ist, eine Distanz zwischen einem Austrittspunkt aus der Optik des Interferometers und einem Punkt auf der Ebene. Der Austrittsbereich der Optik wird als Ebene rechtwinklig zur Messstrahlaustrittsrichtung angenommen. Ebenso wird unter der axialen Richtung die Messstrahlrichtung oder die z-Richtung verstanden. Dem Fachmann ist klar, dass die Messstrahlrichtung abhängig von einem lateralen Austrittspunkt aus einer Optik sein kann, d.h. falls der Messstrahl zum Beispiel in einem Randbereich einer Linse aus der Optik austritt, kann der Messstrahl von einer idealen Richtung, welche zum Beispiel im Zentrum der Linse eingenommen wird, abweichen. Sofern nichts anderes gesagt wird, wird nachfolgend davon ausgegangen, dass lateral beabstandete Messstrahlen beim Auftreffen auf eine Ebene parallel sind und damit den Idealfall repräsentieren.

Im Verfahren wird vorerst ein erster axialer Abstand eines ersten Punktes auf der ersten Ebene mit dem Messstrahl interferometrisch gemessen. Anschliessend wird ein zweiter axialer Abstand eines zweiten Punktes auf einer der mindestens einen Ebene mit dem Messstrahl gemessen. Der erste und der zweite Punkt sind zueinander beabstandet. Die beiden Punkte können dabei sowohl axial als auch lateral beabstandet sein. Weiter ist auch eine Kombination eines axialen und lateralen Abstandes möglich. Die eine der mindestens einen Ebene kann entweder die erste Ebene oder auch eine zweite oder eine weitere Ebene sein. Eine oder mehrere der Ebenen können verschwenkbar ausgebildet sein.

Dadurch, dass die erste Ebene um einen ersten Winkel verschwenkt ist, können Abstände zweier auf der ersten Ebene beabstandete Punkte gemessen werden, worauf aufgrund des bekannten ersten Winkels auf einen lateralen Abstand zwischen den Messstrahlen geschlossen werden kann. Damit kann die laterale Verschiebung des Messstrahls kalibriert werden. Dadurch, dass die erste Ebene um einen Winkel verschwenkt ist, kann diese Kalibrierung ausgehend von verschiedenen lateralen Positionen (zum Beispiel Zentrumsnah, oder im Randbereich der Optik) durchgeführt werden. Ebenso können Kalibrierungen mit unterschiedlichen axialen Abstandsdifferenzen (in z-Richtung) durchgeführt werden, indem einfach der laterale Abstand zwischen den Punkten verändert wird. Ein weiterer Vorteil liegt darin, dass nicht nur einzelne Punkte verglichen werden können, sondern durch Punktabfolgen definierte Trajektorien (siehe weiter unten).

In einer bevorzugten Ausführungsform ist der erste Winkel kleiner als 50 mrad, vorzugsweise kleiner als 20 mrad, besonders bevorzugt kleiner als 5 mrad, wobei mit 1 mrad = 0.001 rad = 0.001×180°/Pi bezeichnet wird. Der Bereich von 1 - 5 mrad hat sich in zahlreichen Versuchen als besonders vorteilhaft herausgestellt. Dabei gilt es abzuwägen zwischen einer ausreichenden axialen Reflexion an der verschwenkten Ebene oder der Detektionseffizienz und der Differenz der axialen Distanz zur Ebene bei zwei lateral beabstandeten Messpunkten. Je kleiner der gewählte Winkel zwischen der Normalen der Ebene und einem auf die Ebene auftreffenden Strahlengang ist, desto grösser ist der Anteil des in Richtung des Strahlengangs reflektierten Messstrahls, so dass bessere Messresultate erreicht werden können. Je grösser der gewählte Winkel ist, desto grösser ist hingegen die axiale Distanzänderung bei einer lateralen Verschiebung des Messarms, womit eine präzisere Kalibrierung erreicht werden kann.

Je nach Dimension des Interferometers, insbesondere eines Messbereichs in der x,y-Ebene, der Oberflächenbeschaffenheit der Ebenen und den Anforderungen an die Präzision der Kalibrierung können aber auch andere Winkel vorgesehen sein, welche insbesondere auch grösser als 50 mrad sein können.

Die erste Ebene kann in einer bevorzugten Ausführungsform motorisch verschwenkbar sein. Weiter können aber auch eine weitere oder mehrere Ebenen motorisch verschwenkbar sein. Eine oder mehrere Ebenen können auch motorisch in den Strahlengang ein- oder ausfahrbar sein bzw. umgekehrt. Damit können je nach Anwendung unterschiedliche Winkel mit gegebenenfalls unterschiedlichen Ebenen eingestellt werden, womit das Kalibrierverfahren gesamthaft variabel gehalten werden kann. Die mechanische Realisierung des motorischen Verstellens von Winkeln ist dem Fachmann hinreichend bekannt, geeignete Techniken werden zum Beispiel bei Schwenkspiegeln in optischen Geräten eingesetzt. Der motorische Antrieb kann dabei direkt mit einer Schwenkachse zusammenwirken, um diese direkt oder über ein Getriebe zu rotieren. Weiter kann auch ein Linearantrieb vorgesehen sein, über welchen die Ebene mittels eines Hebelarms um die Schwenkachse verschwenkt wird.

Die erste Ebene kann auch anderweitig verschwenkbar ausgebildet sein. So kann der Schwenkvorgang auch manuell erfolgen. Weiter können auch Elektromagnete zum Verschwenken der ersten Ebene eingesetzt werden. Damit können insbesondere bei zwei Schwenkstellungen, sehr kurze Schaltzeiten erreicht werden.

Es können auch mehr als eine Ebene verschwenkbar ausgebildet sein. Insbesondere können auch zum Beispiel zwei oder mehr Ebenen zueinander fix, insbesondere keilförmig, angeordnet sein, wobei die zwei oder mehr Ebenen zusammen verschwenkt werden.

In einer anderen bevorzugten Ausführungsform sind sämtliche Ebenen nicht motorisch betätigbar, sondern bezüglich eines Prüfkörpers oder des Interferometers (siehe unten) fix angeordnet.

Vorzugsweise weist dazu ein Interferometer neben der ersten zusätzlich eine zweite Ebene zur Reflektion des Messstrahls auf, welche zur ersten Ebene verschwenkt ist.

In Varianten können die Ebenen auch durch einen separaten Prüfkörper umfasst sein, welcher nicht Teil des Interferometers ist. In einer weiteren Variante kann das Interferometer aber einen solchen Prüfkörper auch umfassen.

Vorzugsweise weist die erste Ebene eine Planarität auf, welche unterhalb der Messgenauigkeit des Interferometers liegt. Damit wird eine gute Präzision des Kalibrierverfahrens erreicht. Es kann anderseits von Vorteil sein, wenn die Ebene eine Streuwirkung aufweist, welche trotz der Neigung der Ebene zum Messstrahl einen hinreichend grossen Anteil des Messstrahls exakt in Messstrahlrichtung zurück reflektieren kann. Damit kann die Signalintensität optimiert werden.

In Varianten kann die Planarität zu Gunsten der Streuung des Messstrahls und damit der Signalstärke auch über der Messgenauigkeit des Interferometers liegen. Dies hängt nicht zuletzt von der Messgenauigkeit des Interferometers ab.

Vorzugsweise wird ein Messobjektiv von einer ersten Position, zum Vermessen eines Objektes in der Messposition, in eine zweite Position, zur Kalibrierung des Interferometers, positioniert, so dass das Messobjektiv auf die erste Ebene gerichtet ist. In dieser Variante ist die Ebene vorzugsweise fix im Interferometer angeordnet. Durch die fixe Position kann die Ebene besonders präzise positioniert werden, insbesondere kann damit der Winkel der Ebene zum Strahlengang mit hoher Präzision vorgegeben werden. Durch den präzisen Winkel kann wiederum eine optimale Kalibrierung des Interferometers erreicht werden.

In einer weiteren Variante ist die erste Ebene in einer Messposition des Interferometers in den Strahlengang eingeführt. Dazu kann die Ebene, zum Beispiel in Form eines Prüfkörpers (siehe weiter unten), in den Strahlengang des Interferometers, insbesondere in die Messposition des Interferometers einschwenkbar sein.

Die Messposition bezeichnet dabei diejenige Position, an welcher ein mittels des Interferometers zu untersuchendes Objekt eingesetzt wird, d.h. typischerweise am Ende des Messarms. Durch diese Anordnung kann in einfacher Weise das gesamte Interferometer in einem Schritt kalibriert werden. Sämtliche Fehlerquellen können damit kumuliert erfasst und in einem Schritt behoben werden, womit eine besonders präzise und effiziente Kalibrierung erreicht wird. Von besonderer Bedeutung ist dieses Verfahren, wenn die Fehlerquellen durch geeignete Algorithmen abgefangen werden sollen.

In weiteren Varianten kann die erste Ebene auch alternativ oder zusätzlich in anderen Bereichen des Interferometers angeordnet werden. Dies kann dann von Vorteil sein, wenn eine Fehlerquelle lokalisiert werden soll, so dass diese mechanisch, z.B. durch Änderung oder Ersetzen von optischen Komponenten, behoben werden kann.

Erfindungsgemäss wird zur Messung des zweiten Abstandes der Messstrahl lateral um eine erste Distanz auf einer der Ebenen verschoben, so dass der zweite Punkt vom ersten Punkt beabstandet ist. Dem Fachmann ist klar, dass die laterale Verschiebung mittels einer Optik erfolgt und das Endergebnis der lateralen Verschiebung auf der Ebene in Abhängigkeit der Verschiebungseinrichtung, z.B. in Abhängigkeit eines Schwenkspiegels, erfolgt. Die effektive laterale Verschiebung des Messstrahls auf der Ebene wird schliesslich, wie oben erläutert, anhand des bekannten Verschwenkwinkels der ersten Ebene und der gemessenen Differenz der axialen Abstände der Punkte ermittelt, um das Interferometer zu kalibrieren.

Zusätzlich kann auch die erste Ebene bewegt oder der Messstrahl an einer zur ersten Ebene beabstandeten zweiten Ebene reflektiert werden.

Bevorzugt wird der Messstrahl mittels eines Schwenkspiegels auf eine Optik geleitet, wobei durch ein Verschwenken des Schwenkspiegels der aus der Optik austretende Messstrahl auf einer der Ebenen um die erste Distanz lateral verschoben wird. Der Schwenkspiegel kann dazu den Messstrahl auf eine Sammellinse lenken, welche den Strahl jeweils parallel zu einer Messstrahlrichtung zu einer der Ebenen leitet. Eine solche Ablenkeinheit kann zum Beispiel auf Basis eines Galvanometrischen Scanners oder als MEMS-Spiegel ausgebildet sein.

In Varianten kann auch ein linear verfahrbarer Reflektor, z.B. ein Spiegel oder ein Prisma zur lateralen Verschiebung des Messstrahls vorgesehen sein. Dem Fachmann sind weitere Ausführungsformen bekannt.

Erfindungsgemäss wird mittels des ersten Winkels und einer Differenz zwischen den Abständen des ersten Punktes und des zweiten Punktes der laterale Abstand zwischen dem ersten Punkt und dem zweiten Punkt berechnet. Der laterale Abstand (vorliegend in x-Richtung) berechnet sich wie folgt:

$$\Delta x = \Delta z \cdot \tan \alpha$$

Dabei bezeichnet $\Delta z = z_2 - z_1$ eine Abstandsdifferenz zwischen dem gemessenen Abstand des ersten Punktes und dem gemessenen Abstand des zweiten Punktes in z-Richtung respektive in axialer Richtung. Mit $\alpha$ wird der bekannte Verschwenkwinkel der Ebene bezeichnet - die Verschwenkachse liegt vorliegend parallel zur y-Achse, der Winkel selbst liegt in der x,z-Ebene. Der Verschwenkwinkel $\alpha$ wird damit zwischen der Normalen der ersten Ebene und der z-Richtung respektive der axialen Richtung bestimmt. Mit tan wird, wie üblich die Tangensfunktion abgekürzt. Mit $\Delta x$ wird schliesslich der laterale Abstand zwischen den beiden Punkten bezeichnet. Dieser laterale Abstand ist im Idealfall ebenso der Abstand zwischen den lateral beabstandeten Messstrahlen zur Messung der Abstände der beiden Punkte.

Vorzugsweise werden mit den Daten aus der Kalibrierung (wie auch aus nachfolgend beschriebenen Kalibrierdaten) die Messergebnisse bereinigt, so dass präzisere Messungen durchgeführt werden können. Damit wird eine besonders effiziente Kalibrierung erreicht. In Varianten können die Daten auch verwendet werden, um die Vorrichtung mechanisch zu justieren oder die Ansteuerung der Strahlablenkung zu optimieren.

Dem Fachmann ist klar, dass analog $\Delta y$ bestimmt werden kann, wenn die laterale Verschiebung in y-Richtung erfolgt und die Ebene um eine Verschwenkachse parallel zur x-Achse verschwenkt ist. In einem besonders bevorzugten Verfahren werden beide lateralen Abstände kalibriert, sowohl in x-Richtung wie auch in y-Richtung.

In Varianten können auch der Winkel der Ebene oder die axiale Differenz zwischen den Punkten kalibriert werden, sofern die beiden anderen Werte ($\Delta x$ und $\Delta z$ respektive $\Delta x$ und $\alpha$) bekannt sind.

Eine bekannte Fehlerquelle bei Interferometer, insbesondere auch bei OCT-Geräten ist die sogenannte Bildfeldwölbung. Diese ergibt sich dadurch, dass bei lateraler Verschiebung des Messstrahls die Punkte konstanter optischer Pfadlängendifferenzen nicht gemäss einem Idealfall auf einer Geraden liegen, sondern entlang einer nicht geraden Kurve verlaufen, wobei von einem zur lateralen Position abhängigen Offset gesprochen wird. Bei einer Messung eines ebenen Objekts kann dies zum Beispiel gewölbt erscheinen. Weiter können zwei lateral beabstandete Messstrahlen, welche auf die Ebene auftreffen aufgrund von Fehlerquellen in der Optik nicht parallel verlaufen, so dass zwei lateral beabstandete Messstrahlen statt parallel zu verlaufen, einen Winkel β > 0 einschliessen. Auch solche Fehlerquellen können eliminiert werden.

In einem weiter bevorzugten Verfahren werden zur Eliminierung von Bildfeldwölbungen vorzugsweise die Abstände des ersten und des zweiten Punktes auf der um den ersten Winkel verschwenkten ersten Ebene gemessen. Auf einer der Ebenen, welche um einen negativen Betrag des ersten Winkels verkippt ist oder verkippt wird, wird ein Abstand eines dritten und ein Abstand eines vierten Punktes gemessen. Dabei sind sämtliche Punkte paarweise zueinander beabstandet.

In einem bevorzugten Verfahren liegen der erste und der dritte Punkt respektive der zweite und der vierte Punkt auf einer gemeinsamen Messachse. Im Idealfall liegen die beiden Messachsen in z-Richtung. Im Falle einer Bildfeldwölbung kann eine dieser Messachsen von der idealen z-Richtung abweichen.

In diesem bevorzugten Verfahren werden, wie oben beschrieben die lateralen Abstände der beiden Messpunkte berechnet. Die beiden lateralen Abstände würden im Idealfall, das heisst ohne Bildfeldwölbung, identisch ausfallen. Aufgrund des Unterschieds der beiden lateralen Abstände kann nun auf das Mass der Bildfeldwölbung geschlossen werden, um diese zu eliminieren.

In Varianten kann statt des negativen Betrags des ersten Winkels auch ein anderer Winkel gewählt werden.

Vorzugsweise ist die erste Ebene um den ersten Winkel um eine erste Achse verschwenkt, insbesondere fix verschwenkt, wobei eine zweite Ebene zur Messung der Abstände des dritten und des vierten Punktes um einen zweiten Winkel um eine zweite, zur ersten nicht parallelen Achse verschwenkt, insbesondere fix verschwenkt ist. Die erste Achse und die zweite Achse sind damit entweder Windschief oder weisen einen Schnittpunkt auf. Damit kann mit der ersten und der zweiten Ebene sowohl eine Kalibrierung in x-Richtung als auch in y-Richtung erreicht werden.

In Varianten kann auch genau eine Ebene vorgesehen sein, welche um zwei nicht parallele Achsen verschwenkbar ist.

Bevorzugt sind der erste Punkt und der zweite Punkt jeweils Punkte einer einzigen, gemeinsamen Trajektorie, wobei insbesondere jeweils mehrere Punkte der Trajektorie gemessen werden und wobei die Trajektorie insbesondere einen minimalen Krümmungsradius aufweist, welcher mindestens 1/7 eines Radius eines Umkreises einer zu vermessenden Fläche beträgt. Die Trajektorie bezieht sich dabei auf eine kontinuierliche Bewegung des Messstrahls entlang der Ebene. Während des kontinuierlichen Verfahrens des Messstrahls entlang der Ebene können in bestimmten Zeitintervallen jeweils Messungen vorgenommen werden, welche bevorzugt, aber nicht zwingend, in konstanter Frequenz durchgeführt werden.

Besonders bevorzugt erfolgt die Kalibrierung entlang einer Trajektorie, welche im Anschluss auch für die Untersuchungen am Objekt, zum Beispiel an einem Auge, durchgeführt werden soll. Damit kann eine Kalibrierung des Interferometers selektiv für die durchzuführenden Messungen durchgeführt werden. Insbesondere können damit Messfehler, welche ausserhalb der Trajektorie liegen, ausser Acht gelassen werden, womit kein unnötiger Kalibrieraufwand betrieben werden muss. Damit kann das Kalibrierverfahren insgesamt effizient gehalten werden. Anderseits kann aber auch eine Trajektorie gewählt werden, welche eine besonders optimale Kalibrierung des gesamten Messbereichs erlaubt, so dass unabhängig von der für eine Messung vorgesehenen Trajektorie eine optimale Kalibrierung erreichbar ist.

In Varianten kann statt entlang einer Trajektorie auch punktuell, entlang eines Rasters, zum Beispiel lediglich Gitterknotenpunkte kalibriert werden.

Vorzugsweise wird aufgrund der gemessenen Punkte eine Messstrahlführung derart gesteuert, dass eine Abweichung zwischen den gemessenen Punkten und einer idealen Trajektorie minimiert wird. Im Verfahren wird dabei in einem ersten Schritt eine Kalibrierung durchgeführt, worauf in einer nachfolgenden Messung die Daten zur Korrektur der Messung, insbesondere zur Optimierung der Ansteuerung der Ablenkeinheit, herangezogen werden. Damit wird eine besonders einfache und kostengünstige Kalibrierung erreicht, da keine mechanischen Eingriffe in das System vorgenommen werden müssen. Weiter besteht damit die Möglichkeit, die Kalibrierung derart zu automatisieren, dass ein Anwender diese selbstständig durchführen kann.

In Varianten kann auf Basis der Kalibrierdaten auch eine mechanische Justierung an der Vorrichtung vorgenommen werden. Weiter kann das Kalibrierverfahren auch derart konzipiert sein, dass bei gewissen Abweichungen, zum Beispiel bei besonders grossen Abweichungen, eine solche Justierung der Vorrichtung vorgenommen wird und für marginale Abweichungen, insbesondere in demselben Kalibrierverfahren, eine rein rechnerische Korrektur an den zukünftigen Messdaten vorgenommen wird.

Zur Durchführung des Verfahrens kann ein Prüfkörper eingesetzt werden, welche in eine Strahlengangachse für einen Messstrahl des Interferometers einsetzbar ist.

Ein solcher Prüfkörper zur Kalibrierung eines Interferometers, insbesondere eines OCT-Scanners, ist in einen Strahlengang des Interferometers eingeführt. Der Prüfkörper umfasst eine Strahlengangachse für einen Messstrahl des Interferometers und umfasst hintereinander mindestens eine erste Ebene und eine zweite Ebene, mit welchen ein Messstrahl des Interferometers zumindest teilweise reflektierbar ist und wobei die erste Ebene für den Messstrahl beidseitig teilweise transmittierbar ist und wobei eine Normale mindestens einer der Ebenen zur Strahlengangachse um einen ersten Winkel verschwenkt ist. Der Prüfkörper umfasst damit zwei mögliche Reflektoren für den Messstrahl, welche über dieselbe Strahlengangachse erreichbar sind. Damit wird ein prüfbares und gegebenenfalls zertifizierbares Bauteil erreicht, womit das Interferometer kalibriert werden kann.

Vorzugsweise ist der Prüfkörper zum Einführen in eine Messposition in den Strahlengang des Interferometers ausgebildet. Damit kann ein einziger Prüfkörper für mehrere Interferometer eingesetzt werden, womit eine kostengünstige Kalibrierung bei mehreren Interferometern erreicht werden kann. Weiter kann damit der Prüfkörper in einfacher Weise ausgetauscht werden, zum Beispiel um eine Kalibrierung mit einem anderen Prüfkörper mit zum Beispiel einem anderen ersten Winkel durchzuführen oder aber auch um den Prüfkörper selbst kalibrieren zu können.

In Varianten kann der Prüfkörper auch fix im Interferometer verbaut sein, so dass ein Strahlengang für die Durchführung der Kalibrierung auf den Prüfkörper gelenkt wird. Weiter kann der Prüfkörper auch derart fix mit dem Interferometer verbunden sein, dass dieser in den Strahlengang eingefahren oder eingeschwenkt werden kann, bzw. umgekehrt.

Vorzugsweise umfasst der Prüfkörper weiter eine dritte und eine vierte, den Messstrahl teilweise reflektierende Ebene, wobei die zweite und die dritte Ebene für den Messstrahl beidseitig teilweise transmittierbar sind und wobei die erste, die zweite, die dritte und die vierte Ebene hintereinander auf der Strahlengangachse liegen. Die vierte Ebene muss nicht zwingend transmittierbar sein, wenn der Messstrahl keine hinter der vierten Ebene liegende weitere Ebene erreichen soll. Die Ausbildung mehrerer Ebenen insbesondere auch unterschiedlich geneigter Ebenen ermöglicht eine diversifizierte Kalibrierung des Interferometers in unterschiedlichen axialen wie auch lateralen Abständen zwischen den Messpunkten. Insbesondere wird damit eine simultane Bestimmung der lateralen Koordinaten, der Strahlrichtung sowie der Bildfeldwölbung ermöglicht, womit ein besonders effizientes Kalibrierverfahren bereitgestellt wird.

In Varianten kann auch eine andere Anzahl an Ebenen im Prüfkörper vorgesehen sein. Zum Beispiel können auch drei, fünf oder mehr als fünf Ebenen vorgesehen sein. Weiter kann der Prüfkörper auch rotierbar oder axial verfahrbar ausgebildet sein.

Vorzugsweise schneiden sich eine erste Normale der ersten Ebene und eine zweite Normale der zweiten Ebene, sowie eine dritte Normale der dritten und eine vierte Normale der vierten Ebene. Damit wird eine Variation der Ebenen erreicht, so dass unterschiedliche Kalibrierverfahren durchlaufen werden können. Die Ebenen können sich aber auch weiter in einer Oberflächenbeschaffenheit, dem Brechungsindex, der Ebenendicke etc. unterscheiden, um weitere Faktoren in der Kalibrierung berücksichtigen zu können.

In Varianten können auch zum Beispiel drei oder mehr Ebenen parallel angeordnet sein.

Bevorzugt sind die erste und die zweite Ebene um eine erste Achse sowie die dritte und die vierte Ebene um eine zweite Achse verschwenkt, wobei die erste und die zweite Achse unterschiedlich, insbesondere beabstandet und nichtparallel sind. Damit werden zwei Ebenen erreicht, welche in unterschiedlicher Raumrichtung geneigt sind, so dass eine Kalibrierung in einfacher Weise sowohl in x-Richtung als auch in y-Richtung erreicht werden kann. Besonders bevorzugt sind die beiden Achsen in x-Richtung respektive in y-Richtung ausgerichtet. Es können auch weitere Ebenen über weitere Achsen, welche sich von der ersten und der zweiten unterscheiden, verschwenkt sein.

In Varianten können die erste und die zweite Achse auch parallel sein und sich zum Beispiel im Verschwenkwinkel unterscheiden.

Vorzugsweise ist die mindestens eine Ebene als Glasplatte oder als Spiegel und für den Messstrahl teildurchlässig ausgebildet. Damit wird eine besonders kostengünstige Ausführung des Prüfkörpers erreicht. Falls mehrere Ebenen hintereinander angeordnet sind, sind diejenigen Ebenen teildurchlässig, welche in Strahlengangrichtung vor einer weiteren Ebene stehen, so dass die weitere Ebene vom Messstrahl erfasst werden kann. Die Durchlässigkeit der Ebene bezieht sich dabei auf den Messstrahl. Falls das Interferometer für Messstrahlen in unterschiedlichen Spektren vorgesehen ist, kann es ausreichen, wenn die teilweise Durchlässigkeit für ein bestimmtes Teilspektrum gegeben ist, bevorzugt sind die Ebenen aber für das gesamte Spektrum des Messstrahls teildurchlässig.

In Varianten können auch andere teildurchlässige Materialien eingesetzt werden, zum Beispiel ein Kunststoff. Dem Fachmann sind dazu geeignete Materialien bekannt.

Zusammenfassend werden folgende Varianten zur Kalibrierung ermöglicht:

1. Um für jedes Ansteuersignal der Ablenkeinheit die laterale exakte Strahlposition und den Strahlwinkel zu bestimmen, kann wie folgt vorgegangen werden:

   a. Eine Ebene, zum Beispiel ein flaches Objekt wie eine Glasplatte oder ein Spiegel wird in den Strahlengang gebracht. Die Ebene wird respektive ist um eine zur Strahlrichtung senkrechten Achse verkippt. Der Winkel zwischen der Flächennormale und der Strahlrichtung wird dabei als bekannt angenommen.

   b. Eine Distanz zu einem Punkt auf der Ebene wird interferometrisch gemessen.

   c. ein Ansteuersignal wird an die Ablenkeinheit angelegt, so dass der Messstrahl lateral (parallel) verschoben wird.

   d. Eine Distanz zu einem weiteren, lateral zum ersten verschobenen Punkt auf der Ebene wird interferometrisch gemessen.

   e. Auf Basis des bekannten Winkels und der beiden gemessenen Distanzen kann die laterale Position entlang der Verkipp-Richtung berechnet werden.

Um verschiedene laterale Positionen aufeinander beziehen zu können, muss eine Distanz zur verkippten Ebene bekannt oder zumindest konstant sein.

2. Die Kalibrierung kann für Trajektorien durchgeführt werden. Das Ansteuersignal besteht dabei aus einer Sequenz von Werten. Für jeden Wert wird eine Distanz zum verkippten Objekt gemessen. Die Komponente der Trajektorie entlang der Verkipprichtung kann nun aus den Distanzen berechnet werden.

3. Die Kalibrierung kann auch für zweidimensionale Trajektorien durchgeführt werden. Das Ansteuersignal besteht dabei aus einer Sequenz von Tupeln (z.B. aus den beiden Signalen für die x- und y-Achse). Das Objekt wird erst in eine Richtung verkippt (z.B. entlang x-Achse) und für jedes Element der Sequenz die Distanz gemessen. Aus diesen Distanzen kann die Komponente der Trajektorie entlang der ersten Verkipprichtung gemessen werden. Anschliessend wird das Objekt in eine zweite Richtung verkippt (z.B. entlang y-Achse) und für jedes Element der Sequenz die Distanz gemessen. Aus diesen zweiten Distanzen kann die Komponente der Trajektorie entlang der zweiten Verkipprichtung gemessen werden.

4. Weiter kann eine Bildfeldwölbung eliminiert werden. Je nach verwendeter Messoptik (Objektiv, Scannergeometrie) kann die gemessene Distanz einen von der lateralen Position abhängigen Offset enthalten. Misst man nun für verschiedene laterale Positionen die Distanz zu einem ebenen Objekt, so erscheint es in diesem Fall gewölbt. Um dennoch eine korrekte Kalibrierung zu erhalten, kann man in einer ersten Messung das Objekt um einen positiven Winkel gegenüber der Strahlrichtung verkippen, und die Distanz messen. In einem zweiten Schritt wird das Objekt um den gleichen Winkel, aber in Bezug auf die Strahlrichtung in Gegenrichtung verkippt. Wiederum wird die Distanz gemessen. Aus der Differenz der beiden Distanzen und der Differenz der beiden Verkippwinkel kann wiederum die laterale Position berechnet werden, womit auf das Mass der Bildfeldwölbung geschlossen werden kann.

5. Die Kalibrierung kann mit einem mehrflächigen Kalibrierkörper mit statisch verkippten Ebenen durchgeführt werden. Dazu wird ein Objekt genutzt, welches mehrere gegeneinander verkippte Ebenen enthält, zum Beispiel eine aus vier Glasflächen bestehende Anordnung, deren Normalen in +x, -x, +y, -y-Richtung gegenüber einer Messstrahlrichtung verkippt sind. Der Vorteil einer solchen Anordnung ist, dass die Verkippwinkel durch Konstruktion oder durch mechanische Messung präzise bestimmt werden können, und dass sich mehrere Kalibriermessungen zu einer Messung kombinieren lassen.

6. Weiter kann ein Strahlwinkel bestimmt werden. Dazu wird die Kalibrierung der Trajektorien in zwei unterschiedlichen axialen Distanzen zum Objektiv durchgeführt. Damit lässt sich anhand der Differenz der lateralen Positionen und der Differenz der axialen Distanzen der Winkel des Strahls bestimmen.

7. Die Trajektorien können optimiert werden. Das beschriebene Kalibrierverfahren bietet sich insbesondere bei einer open-loop-Ansteuerung der Ablenkeinheit an. Um auch in einer open-loop-Ansteuerung die von der Ablenkeinheit ausgeführte Trajektorie an eine ideale Trajektorie anzunähern, kann man, gegebenenfalls iterativ, die Ansteuersignale so anpassen, dass die Differenz zwischen ausgeführter Trajektorie und idealer Trajektorie minimiert wird. Das Kalibrierverfahren kann aber auch bei einer closed-loop-Ansteuerung umgesetzt werden.

8. Der Kalibrierkörper kann in das OCT-Gerät integriert werden. Dies erlaubt das Überprüfen der korrekten Funktionsweise des Geräts, oder das Neu-Kalibrieren (periodisch, oder bei Änderungen der Betriebsbedingungen). Weiter können auf diese Weise neue Trajektorien für das Gerät verfügbar gemacht und für quantitative (kalibrierte) Messungen genutzt werden, ohne komplizierte Benutzereingriffe durchführen zu müssen.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1 einen schematischen Aufbau eines Interferometers mit einer verkippten Ebene in der Messposition, zur Durchführung des Kalibrierverfahrens;

Fig. 2 einen Ausschnitt der Figur 1, umfassend die Messposition mit der verkippten Ebene;

Fig. 3 eine schematische Darstellung einer ersten Ausführungsform eines Prüfkörpers;

Fig. 4 eine schematische Darstellung einer zweiten Ausführungsform eines Prüfkörpers.

Grundsätzlich sind in den Figuren gleiche Teile mit gleichen Bezugszeichen versehen.

**Wege zur Ausführung der Erfindung**

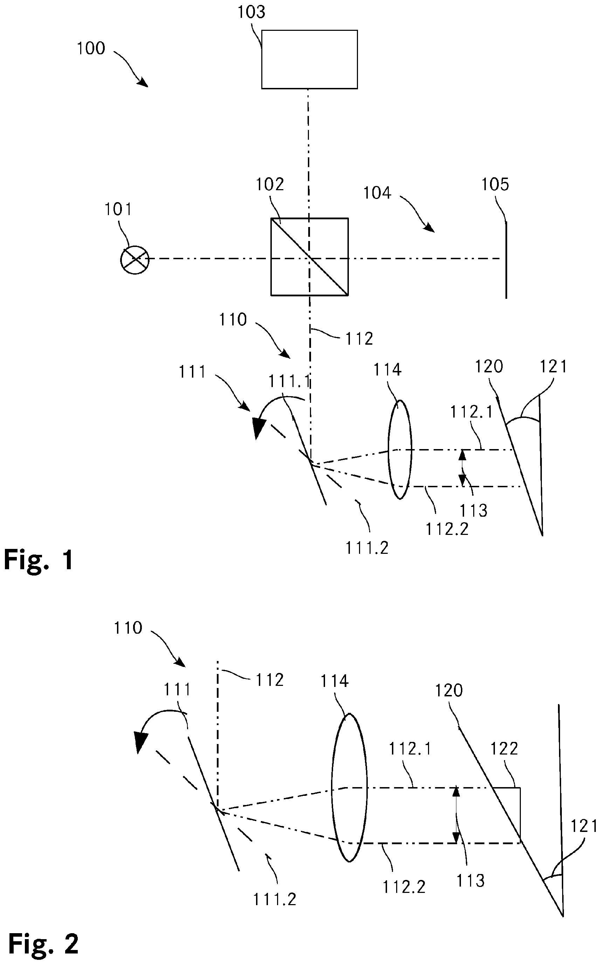

Die Figur 1 zeigt einen schematischen Aufbau eines Interferometers 100 mit einer verkippten Ebene 120 in der Messposition, zur Durchführung des Kalibrierverfahrens. Das Interferometer 100 stellt lediglich eine beispielhafte Ausführungsform dar und kann auch anderweitig ausgebildet sein.

Das Interferometer 100 ist vorliegend als Michelson-Interferometer ausgebildet. Das Interferometer 100 umfasst eine Lichtquelle 101, so dass das Interferometer 100 für die optische Kohärenztomografie einsetzbar ist. Das Licht der Lichtquelle 101 wird über einen Strahlteiler 102 auf einen Referenzarm 104 mit einem Reflektor 105 sowie auf einen Messarm 110, vorliegend als Messstrahl 112, aufgeteilt. Aus dem Referenzarm 104 respektive Messarm 110 reflektiertes Licht wird zum Detektor 103 geleitet, welcher vorliegend mittels Photodiode das optische Signal in ein elektrisches Signal umwandelt.

Im Messarm 110 trifft der Messstrahl 112 auf einen Schwenkspiegel 111, welcher in der Figur 1 in einer ersten Position 111.1 mit durchgezogener Linie und in einer zweiten Position 111.2 mit gestrichelter Linie dargestellt ist. Der Schwenkspiegel 111 ist damit, vorliegend motorisch, von einer ersten Position 111.1 in eine zweite Position 111.2 und zurück verschwenkbar. Derselbe Schwenkspiegel 111 oder ein nicht dargestellter weiterer Schwenkspiegel ist in einer weiteren Achse verschwenkbar, so dass der Messstrahl in einer x,y-Ebene zweidimensional verfahren werden kann. Solche Interferometer 100 sowie deren Abwandlungen sind dem Fachmann hinreichend bekannt.

Der vom Schwenkspiegel 111 in der ersten Position 111.1 reflektierte Messstrahl 112.1 trifft auf eine Optik 114 auf, welche den Messstrahl 112.1 auf eine verkippte Reflexionsebene 120 leitet. Die Optik 114 ist vorliegend beispielhaft als eine einzelne Linse dargestellt - dem Fachmann ist jedoch klar, dass die Optik 114 mehrere optische Elemente, insbesondere mehrere Linsen umfassen kann. Die Reflexionsebene 120 oder einfach Ebene 120, ist vorliegend als dünne Glasplatte ausgebildet. Die Reflexionsebene 120 ist in der Messposition des Interferometers 100 angeordnet, also dort, wo ansonsten ein zu vermessendes Objekt, wie zum Beispiel ein Auge, platziert würde. Dem Fachmann ist jedoch klar, dass die Reflexionsebene 120 nicht zwingend in der Messposition angeordnet sein muss, sondern auch innerhalb der Optik 114 oder zwischen Schwenkspiegel 111 und Optik 114 angeordnet sein kann. Eine Normale der Reflexionsebene 120 ist gegenüber dem aus der Optik 114 austretendem Messstrahl um einen Winkel von 5 mrad verschwenkt, wobei der Winkel in der Abbildung nicht massstäblich wiedergegeben ist. Im vorliegend betrachteten eindimensionalen Fall weisen der Schwenkspiegel 111 und die Reflexionsebene 120 parallele Schwenkachsen auf. Im praxisrelevanten zweidimensionalen Fall sind die Achsen vorzugsweise, aber nicht zwingend, jeweils in x-Richtung und in y-Richtung ausgerichtet.

Der Winkel der Reflexionsebene 120 ist derart gewählt, dass ein hinreichender Anteil des Messstrahls 112.1 an der Reflexionsebene 120 in Richtung des aus der Optik 114 austretenden Messstrahls 112.1 zurück reflektiert oder gestreut wird. Der Reflektierte Messstrahl 112.1 gelangt so wiederum über die Optik 114, den Schwenkspiegel 111 entlang des Messarms 110 über den Strahlteiler 102 zum Detektor 103.

Wird nun der Schwenkspiegel 111 von der ersten Position 111.1 in die zweite Position 111.2 verschwenkt, so tritt der reflektierte zweite Messstrahl 112.2 zum ersten Messstrahl 112.1 lateral verschoben aus der Optik 114 aus. Der zweite Messstrahl 112.2 verläuft zwischen der Optik 114 und der Reflexionsebene 120 parallel. In der Praxis treten zur Parallelität zwar Abweichungen auf, diese können aber mit dem vorliegenden Kalibrierverfahren behoben oder zumindest quantifiziert werden. Auch der zweite Messstrahl 112.2 wird von der Reflexionsebene 120 in Richtung des aus der Optik 114 austretenden zweiten Messstrahls 112.2 zurück reflektiert und gelangt so zum Detektor 103.

Die Figur 2 zeigt einen Ausschnitt der Figur 1, umfassend die Messposition mit der verkippten Reflexionsebene 120. Für das Kalibrierverfahren wird der Verkippwinkel 121 der Reflexionsebene 120 als gegeben vorausgesetzt. Anhand der axialen Differenz der beiden gemessenen Distanzen des ersten Messstrahl 112.1 und des zweiten Messstrahl 112.2 sowie des Verkippwinkels 121 kann nun auf den lateralen Abstand 113 zwischen den beiden Messstrahlen geschlossen werden. Damit kann die Messstrahlablenkung durch den Schwenkspiegel 111 kalibriert werden.

Die für die Kalibrierung verwendeten Ebenen können in unterschiedlicher Form vorliegen. Einerseits können diese Ebenen im Interferometer verbaut und zum Beispiel in den Strahlengang einführbar sein. Andererseits können die Ebenen in einem separaten Gerät vorliegen, welches als Kalibrierkörper oder Prüfkörper 300 bei Bedarf in den Strahlengang eingesetzt werden kann.

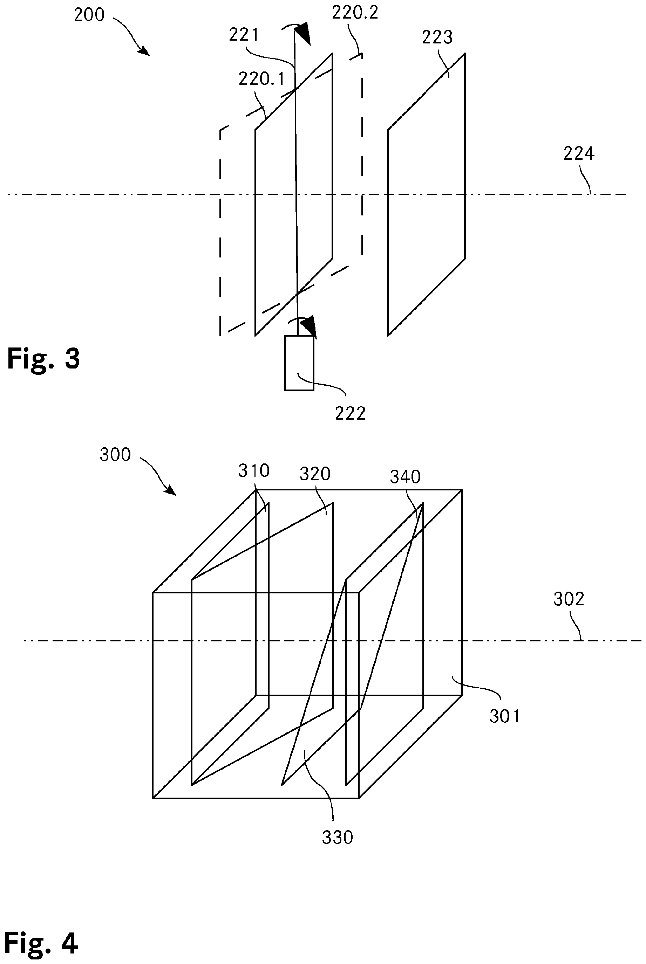

Die Figur 3 zeigt eine schematische Darstellung einer ersten Ausführungsform eines Prüfkörpers 200. Dieser weist vorliegend eine erste Ebene 220 mit einer Kippachse 221 auf, um welche die Ebene 220 verkippbar ist. Dargestellt sind mit ausgezogener Linie eine erste Position 220.1 und mit gestrichelter Linie eine zweite Position 220.2 der Ebene, welche durch ein Verkippen der Ebene 220 erreicht wird. Im vorliegenden Prüfkörper wird diese erste Ebene mittels eines Antriebs 222, umfassend einen Elektromotor, verkippt. Der Prüfkörper umfasst weiter eine fix angeordnete zweite Ebene 223 auf, welche vorliegend eine Normale parallel zur Messstrahlachse 224 aufweist. Vorliegend ist die Ebene 220 beidseitig teildurchlässig ausgebildet, so dass der Messstrahl auch die zweite Ebene 223 erreichen kann.

Dem Fachmann ist klar, dass auf die zweite Ebene 223 auch verzichtet werden kann. In diesem Fall kann die erste Ebene 220 auch undurchlässig ausgebildet sein, so dass der Messstrahl 224 im Wesentlichen vollständig durch die Ebene 220 reflektierbar ist. Weiter können auch mehr als eine verkippbare Ebene vorgesehen sein, welche individuell oder zusammen, mit einem Antrieb, verkippbar sind. Auch können weitere fix angeordnete Ebenen vorgesehen sein.

Der Prüfkörper 200 weist vorliegend kein explizites Gehäuse auf, da dieser zur permanenten Montage in einem Interferometer vorgesehen ist, so dass ein Gehäuse nicht zwingend notwendig ist. Alternativ kann der Prüfkörper 200 aber auch zum bedarfsmässigen Einsetzten in den Strahlengang des Interferometers ausgebildet sein.

In einer besonders bevorzugten Variante sind im Prüfkörper mehrere Ebenen fix angeordnet, womit ein kostengünstiger und präziser Prüfkörper erreicht wird.

Die Figur 4 zeigt eine schematische Darstellung eines solchen Prüfkörpers 300 als zweite Ausführungsform, welche im Bedarfsfall in der Messposition des Interferometers 100 eingesetzt werden kann. Auch dieser Prüfkörper 300 kann dazu ausgebildet sein, an einer anderen Stelle des Strahlengangs des Interferometers 100 eingesetzt zu werden.

Der Prüfkörper 300 umfasst ein im Wesentlichen ein quaderförmiges Gehäuse 301, in welchem vier Ebenen 310, 320, 330, 340 so angeordnet sind, dass sämtliche Ebenen von einem Messstrahl 302 erreicht werden. Die erste Ebene 310 ist parallel zu einer ersten transmitierbaren oder offenen Gehäuseseite angeordnet. Die vierte Ebene 340 ist ebenfalls parallel zur ersten Gehäuseseite angeordnet. Zwischen der ersten und der vierten Ebene 340 sind zwei verkippte Ebenen 320, 330 angeordnet. Die zweite Ebene ist um eine y-Achse verkippt und die dritte Ebene 330 ist um eine x-Achse verkippt, während der Messstrahl 302 den Prüfkörper 300 in einer z-Richtung durchläuft. Der Verkippwinkel beträgt vorliegend 3 mrad, wobei der Winkel nicht massstäblich dargestellt ist.

Zusammenfassend ist festzustellen, dass erfindungsgemäss ein Verfahren geschaffen wird, welches eine präzise und effiziente Kalibrierung eines Interferometers erlaubt.

**Patentansprüche**

1. Verfahren zur lateralen Kalibrierung eines Interferometers (100), insbesondere eines OCT-Scanners, mit einem Strahlengang für einen Messstrahl (112), wobei mindestens eine den Messstrahl (112) mindestens teilweise reflektierende Ebene (320) in den Strahlengang eingeführt ist, **dadurch gekennzeichnet, dass** eine Normale einer ersten mindestens teilweise reflektierende Ebene (320) zu einem auf die erste mindestens teilweise reflektierende Ebene (320) axial auftretenden Messstrahl (112) um einen ersten Winkel verschwenkt ist, wobei die erste mindestens teilweise reflektierende Ebene (320), der erste Winkel und der Messstrahl derart ausgebildet und angeordnet sind, dass zumindest ein Teil des durch die erste mindestens teilweise reflektierende Ebene reflektierten Messstrahls in Auftreffrichtung reflektiert oder gestreut wird, und wobei die folgenden Schritte ausgeführt werden:

a. interferometrisches Messen eines ersten axialen Abstandes eines ersten Punktes auf der ersten mindestens teilweise reflektierenden Ebene (320) mit dem Messstrahl (112);

b. interferometrisches Messen eines zweiten axialen Abstandes eines zweiten Punktes auf einer der mindestens einen mindestens teilweise reflektierenden Ebene (320) mit dem Messstrahl (112), wobei zur Messung des zweiten axialen Abstandes der Messstrahl (112) lateral um eine erste Distanz auf der ersten mindestens teilweise reflektierenden Ebene (320) verschoben wird, so dass der zweite Punkt zum ersten Punkt beabstandet ist; und

c. Berechnen einer ersten lateralen Distanz (113) zwischen dem ersten Punkt und dem zweiten Punkt mittels des ersten Winkels (121) und einer Differenz zwischen den axialen Abständen des ersten Punktes und des zweiten Punktes.

2. Verfahren nach Anspruch 1, **dadurch gekennzeichnet, dass** die erste mindestens teilweise reflektierende Ebene (320) eine Planarität aufweist, welche unterhalb der Messgenauigkeit des Interferometers (100) liegt.

3. Verfahren nach Anspruch 1 oder 2, **dadurch gekennzeichnet, dass** ein Messobjektiv von einer ersten Position, zum Vermessen eines Objektes in der Messposition in eine zweite Position zur Kalibrierung des Interferometers (100) positioniert wird, so dass das Messobjektiv auf die erste mindestens teilweise reflektierende Ebene (320) gerichtet ist.

4. Verfahren nach Anspruch 1, **dadurch gekennzeichnet, dass** der Messstrahl (112) mittels eines Schwenkspiegels auf eine Optik des Interferometers geleitet wird, wobei durch ein Verschwenken des Schwenkspiegels der aus der Optik des Interferometers austretende Messstrahl (112) auf einer der mindestens teilweise reflektierenden Ebenen (320) um die erste Distanz (113) lateral verschoben wird.

5. Verfahren nach Anspruch 1, **dadurch gekennzeichnet, dass** die Abstände des ersten und des zweiten Punktes auf der um den ersten Winkel verschwenkten ersten mindestens teilweise reflektierenden Ebene (320) gemessen werden und wobei auf einer der mindestens teilweise reflektierenden Ebenen (320), welche um einen negativen Betrag des ersten Winkels verkippt ist oder verkippt wird, ein Abstand eines dritten und ein Abstand eines vierten Punktes gemessen werden, wobei sämtliche Punkte paarweise zueinander beabstandet sind.

6. Verfahren nach Anspruch 5, **dadurch gekennzeichnet, dass** die erste mindestens teilweise reflektierende Ebene (320) um den ersten Winkel um eine erste Achse verschwenkt ist, wobei eine zweite mindestens teilweise reflektierende Ebene (330) zur Messung der Abstände des dritten und des vierten Punktes um einen zweiten Winkel um eine zweite, zur ersten nicht parallelen Achse verschwenkt ist.

7. Verfahren nach einem der Ansprüche 1 bis 6, **dadurch gekennzeichnet, dass** der erste Punkt und der zweite Punkt jeweils Punkte einer einzigen, gemeinsamen Trajektorie sind, wobei insbesondere jeweils mehrere Punkte der Trajektorie gemessen werden und wobei die Trajektorie insbesondere einen minimalen Krümmungsradius aufweist, welcher mindestens 1/7 eines Radius eines Umkreises einer zu vermessenden Fläche beträgt.

8. Verfahren nach Anspruch 7, **dadurch gekennzeichnet, dass** aufgrund der gemessenen Punkte eine Messstrahlführung derart gesteuert wird, dass eine Abweichung zwischen den gemessenen Punkten und einer idealen Trajektorie minimiert wird.

9. Interferometer (100) mit einem Strahlengang, insbesondere einen OCT-Scanner, umfassend einen Prüfkörper zur Kalibrierung des Interferometers (100), wobei der Prüfkörper im Strahlengang angeordnet ist und mindestens eine erste mindestens teilweise reflektierenden Ebene (220, 320) zum zumindest teilweisen Reflektieren eines Messstrahls (112) des Interferometers (100) aufweist, **dadurch gekennzeichnet, dass** eine Normale der ersten mindestens teilweise reflektierende Ebene (220) zu einem auf die mindestens teilweise reflektierenden Ebene auftreffenden Strahlengang um einen ersten Winkel verschwenkt ist, wobei die mindestens eine erste mindestens teilweise reflektierenden Ebene (220, 320), der Winkel und der Messstrahl derart ausgebildet und angeordnet sind, dass zumindest ein Teil des durch die erste mindestens teilweise reflektierenden Ebene (220, 320) reflektierten Messstrahls (112) in Auftreffrichtung reflektiert oder gestreut wird und wobei das Interferometer (100) über einen Schwenkspiegel verfügt mit dem der Messstrahl (112) auf eine Optik geleitet wird, wobei durch Verschwenken des Schwenkspiegels der aus der Optik austretende Messstrahl (112) auf der ersten mindestens teilweise reflektierenden Ebene (220) um eine erste Distanz lateral verschoben wird, wobei die erste mindestens teilweise reflektierende Ebene (220) motorisch verschwenkbar ist.

10. Interferometer (100) nach Anspruch 9, **dadurch gekennzeichnet, dass** der erste Winkel kleiner als 50 mrad, vorzugsweise kleiner als 20 mrad, besonders bevorzugt kleiner als 5 mrad ist.

11. Interferometer (100) nach Anspruch 9 oder 10, **dadurch gekennzeichnet, dass** der Prüfkörper eine Strahlengangachse für den Messstrahl (112) des Interferometers (100) aufweist, wobei der Prüfkörper hintereinander mindestens eine erste mindestens teilweise reflektierenden Ebene (320) und eine zweite Ebene (310) umfasst, mit welchen der Messstrahl (112) des Interferometers (100) zumindest teilweise reflektierbar ist und wobei die erste mindestens teilweise reflektierende Ebene (320) für den Messstrahl (112) beidseitig teilweise transmittierbar ist und wobei eine Normale mindestens einer der Ebenen (310, 320, 330, 340) zur Strahlengangachse um einen ersten Winkel verschwenkt ist.

12. Interferometer (100) nach Anspruch 11, **dadurch gekennzeichnet, dass** der Prüfkörper weiter eine dritte und eine vierte, den Messstrahl (112) teilweise reflektierende Ebene (330, 340) umfasst, wobei die zweite und die dritte Ebene (310, 330) für den Messstrahl (112) beidseitig teilweise transmittierbar sind und wobei die erste, die zweite, die dritte und die vierte Ebene (310, 320, 330, 340) hintereinander auf der Strahlengangachse liegen.

13. Interferometer (100) nach einem der Ansprüche 11 oder 12, **dadurch gekennzeichnet, dass** eine erste Normale der ersten mindestens teilweise reflektierenden Ebene (310) und eine zweite Normale der zweiten Ebene (320) sich schneiden, sowie eine dritte Normale der dritten Ebene (330) und eine vierte Normale der vierten Ebene (340) sich schneiden.

14. Interferometer (100) nach einem der Ansprüche 11 bis 13, **dadurch gekennzeichnet, dass** die erste und die zweite Ebene (310, 320) um eine erste Achse sowie die dritte und die vierte Ebene (330, 340) um eine zweite Achse verschwenkt sind, wobei die erste und die zweite Achse unterschiedlich, insbesondere beabstandet und nicht parallel sind.

15. Interferometer (100) nach einem der Ansprüche 11 bis 14, **dadurch gekennzeichnet, dass** die mindestens eine mindestens teilweise reflektierenden Ebene (310, 320, 330, 340) als Glasplatte oder als Spiegel für den Messstrahl (112) teildurchlässig ausgebildet ist.

16. Interferometer (100) mit einem Strahlengang, insbesondere einen OCT-Scanner, umfassend einen Prüfkörper zur Kalibrierung des Interferometers (100), wobei der Prüfkörper im Strahlengang angeordnet ist und mindestens eine erste mindestens teilweise reflektierenden Ebene (220, 320) zum zumindest teilweisen Reflektieren eines Messstrahls (112) des Interferometers (100) aufweist, **dadurch gekennzeichnet, dass** eine Normale der ersten mindestens teilweise reflektierenden Ebene (220) zu einem auf die mindestens teilweise reflektierenden Ebene auftreffenden Strahlengang um einen ersten Winkel verschwenkt ist, wobei die mindestens eine erste mindestens teilweise reflektierenden Ebene (220, 320), der Winkel und der Messstrahl derart ausgebildet und angeordnet sind, dass zumindest ein Teil des durch die erste mindestens teilweise reflektierenden Ebene (220, 320) reflektierten Messstrahls (112) in Auftreffrichtung reflektiert oder gestreut wird und wobei das Interferometer (100) über einen Schwenkspiegel verfügt mit dem der Messstrahl (112) auf eine Optik geleitet wird, wobei durch Verschwenken des Schwenkspiegels der aus der Optik austretende Messstrahl (112) auf der ersten mindestens teilweise reflektierenden Ebene (220) um eine erste Distanz lateral verschoben wird, wobei sie eine zweite (223) Ebene zur Reflektion des Messstrahls (112) umfasst, welche zur ersten mindestens teilweise reflektierenden Ebene (220) verschwenkt ist.

**Claims**

1. Method for laterally calibrating an interferometer (100), in particular an OCT scanner, having a beam path for a measuring beam (112), wherein at least one plane (320) that at least partially reflects the measuring beam (112) has been introduced into the beam path, **characterized in that** a normal of a first at least partially reflecting plane (320) is swivelled by a first angle in relation to a measuring beam (112) that is axially incident on the first at least partially reflecting plane (320), wherein the first at least partially reflecting plane (320), the first angle and the measuring beam are configured and arranged in such a way that at least a portion of the measuring beam that is reflected by the first at least partially reflecting plane is reflected or scattered in the direction of incidence, and wherein the following steps are carried out:

    a. interferometric measurement of a first axial spacing of a first point on the first at least partially reflecting plane (320) with the measuring beam (112);

    b. interferometric measurement of a second axial spacing of a second point on one of the at least one at least partially reflecting plane (320) with the measuring beam (112), wherein, in order to measure the second axial spacing, the measuring beam (112) is displaced laterally by a first distance on the first at least partially reflecting plane (320), so that the second point is spaced apart from the first point; and

    c. calculation of a first lateral distance (113) between the first point and the second point by means of the first angle (121) and a difference between the axial spacings of the first point and the second point.

2. Method according to Claim 1, **characterized in that** the first at least partially reflecting plane (320) has a planarity which is below the measurement accuracy of the interferometer (100).

3. Method according to Claim 1 or 2, **characterized in that** a measuring lens is positioned from a first position, for measuring an object in the measuring position, to a second position for calibrating the interferometer (100), so that the measuring lens is directed at the first at least partially reflecting plane (320).

4. Method according to Claim 1, **characterized in that** the measuring beam (112) is guided to an optics of the interferometer by means of a pivoting mirror, wherein, as a result of the pivoting mirror being swivelled, the measuring beam (112) emerging from the optics of the interferometer is laterally displaced by the first distance (113) on one of the at least partially reflecting planes (320).

5. Method according to Claim 1, **characterized in that** the spacings of the first and of the second point on the first at least partially reflecting plane (320) that is swivelled by the first angle are measured, and wherein a spacing of a third and a spacing of a fourth point are measured on one of the at least partially reflecting planes (320), which is or has been tilted by a negative value of the first angle, wherein all of the points are spaced apart from one another in pairs.

6. Method according to Claim 5, **characterized in that** the first at least partially reflecting plane (320) is swivelled by the first angle about a first axis, wherein a second at least partially reflecting plane (330) for measuring the spacings of the third and of the fourth point is swivelled by a second angle about a second axis that is not parallel to the first axis.

7. Method according to one of Claims 1 to 6, **characterized in that** the first point and the second point are each points of a single, common trajectory, wherein in particular a plurality of points of the trajectory are measured in each case, and wherein the trajectory has in particular a minimum radius of curvature which amounts to at least 1/7 of a radius of a circumference of a surface to be measured.

8. Method according to Claim 7, **characterized in that**, on account of the measured points, measuring beam guidance is controlled in such a way that a deviation between the measured points and an ideal trajectory is minimized.

9. Interferometer (100) having a beam path, in particular an OCT scanner, comprising a test specimen for calibrating the interferometer (100), wherein the test specimen is arranged in the beam path and has at least one first at least partially reflecting plane (220, 320) for at least partially reflecting a measuring beam (112) of the interferometer (100), **characterized in that** a normal of the first at least partially reflecting plane (220) is swivelled by a first angle in relation to a beam path that is incident on the at least partially reflecting plane, wherein the at least one first at least partially reflecting plane (220, 320), the angle and the measuring beam are configured and arranged in such a way that at least a portion of the measuring beam (112) that is reflected by the first at least partially reflecting plane (220, 320) is reflected or scattered in the direction of incidence, and wherein the interferometer (100) has a pivoting mirror with which the measuring beam (112) is guided to an optics, wherein, as a result of the pivoting mirror being swivelled, the measuring beam (112) emerging from the optics is laterally displaced by a first distance on the first at least partially reflecting plane (220), wherein the first at least partially reflecting plane (220) can be swivelled in a motor-driven manner.

10. Interferometer (100) according to Claim 9, **characterized in that** the first angle is less than 50 mrad, preferably less than 20 mrad, particularly preferably less than 5 mrad.

11. Interferometer (100) according to Claim 9 or 10, **characterized in that** the test specimen has a beam path axis for the measuring beam (112) of the interferometer (100), wherein the test specimen comprises at least one first at least partially reflecting plane (320) and a second plane (310) in succession, with which planes the measuring beam (112) of the interferometer (100) can be at least partially reflected, and wherein the first at least partially reflecting plane (320) is partially transmissible to the measuring beam (112) on both sides, and wherein a normal of at least one of the planes (310, 320, 330, 340) is swivelled by a first angle in relation to the beam path axis.

12. Interferometer (100) according to Claim 11, **characterized in** the test specimen further comprises a third and a fourth plane (330, 340) that partially reflect the measuring beam (112), wherein the second and the third plane (310, 330) are partially transmissible to the measuring beam (112) on both sides, and wherein the first, the second, the third and the fourth plane (310, 320, 330, 340) are located in succession on the beam path axis.

13. Interferometer (100) according to either of Claims 11 and 12, **characterized in that** a first normal of the first at least partially reflecting plane (310) and a second normal of the second plane (320) intersect, and a third normal of the third plane (330) and a fourth normal of the fourth plane (340) intersect.

14. Interferometer (100) according to one of Claims 11 to 13, **characterized in that** the first and the second plane (310, 320) are swivelled about a first axis and the third and the fourth plane (330, 340) are swivelled about a second axis, wherein the first and the second axis are different, in particular spaced apart and non-parallel.

15. Interferometer (100) according to one of Claims 11 to 14, **characterized in that** the at least one at least partially reflecting plane (310, 320, 330, 340) is configured in a manner partially transmissive to the measuring beam (112) as a glass plate or as a mirror.

16. Interferometer (100) having a beam path, in particular an OCT scanner, comprising a test specimen for calibrating the interferometer (100), wherein the test specimen is arranged in the beam path and has at least one first at least partially reflecting plane (220, 320) for at least partially reflecting a measuring beam (112) of the interferometer (100), **characterized in that** a normal of the first at least partially reflecting plane (220) is swivelled by a first angle in relation to a beam path that is incident on the at least partially reflecting plane, wherein the at least one first at least partially reflecting plane (220, 320), the angle and the measuring beam are configured and arranged in such a way that at least a portion of the measuring beam (112) that is reflected by the first at least partially reflecting plane (220, 320) is reflected or scattered in the direction of incidence, and wherein the interferometer (100) has a pivoting mirror with which the measuring beam (112) is guided to an optics, wherein, as a result of the pivoting mirror being swivelled, the measuring beam (112) emerging from the optics is laterally displaced by a first distance on the first at least partially reflecting plane (220), wherein it comprises a second (223) plane for reflecting the measuring beam (112), said second plane being swivelled in relation to the first at least partially reflecting plane (220).

**Revendications**

1. Procédé d'étalonnage latéral d'un interféromètre (100), en particulier d'un scanner OCT, comprenant un trajet de faisceau destiné à un faisceau de mesure (112), au moins un plan (320) réfléchissant au moins partiellement le faisceau de mesure (112) étant introduit dans le trajet de faisceau, **caractérisé en ce qu'**une normale à un premier plan au moins partiellement réfléchissant (320) est pivotée d'un premier angle par rapport à un faisceau de mesure (112) apparaissant axialement dans le premier plan au moins partiellement réfléchissant (320), le premier plan au moins partiellement réfléchissant (320), le premier angle et le faisceau de mesure étant conçus et disposés de telle sorte qu'au moins une partie du faisceau de mesure réfléchi par le premier plan au moins partiellement réfléchissant soit réfléchie ou diffusée dans la direction d'incidence, et les étapes suivantes étant réalisées :

a. mesurer par interférométrie une première distance axiale d'un premier point dans le premier plan au moins partiellement réfléchissant (320) avec le faisceau de mesure (112) ;

b. mesurer par interférométrie une deuxième distance axiale d'un deuxième point dans l'un des au moins un plan partiellement réfléchissant (320) avec le faisceau de mesure (112), pour mesurer la deuxième distance axiale, le faisceau de mesure (112) étant décalé latéralement d'une première distance dans le premier plan au moins partiellement réfléchissant (320) de sorte que le deuxième point soit espacé du premier point ; et

c. calculer une première distance latérale (113) entre le premier point et le deuxième point au moyen du premier angle (121) et une différence entre les distances axiales du premier point et du deuxième point.

2. Procédé selon la revendication 1, **caractérisé en ce que** le premier plan au moins partiellement réfléchissant (320) a une planéité inférieure à la précision de mesure de l'interféromètre (100).

3. Procédé selon la revendication 1 ou 2, **caractérisé en ce qu'**un objectif de mesure est positionné d'une première position pour mesurer un objet dans la position de mesure à une deuxième position pour calibrer l'interféromètre (100) de sorte que l'objectif de mesure soit orienté sur le premier plan au moins partiellement réfléchissant (320).

4. Procédé selon la revendication 1, **caractérisé en ce que** le faisceau de mesure (112) est guidé sur une optique de l'interféromètre au moyen d'un miroir pivotant, un pivotement du miroir pivotant permettant de déplacer latéralement le faisceau de mesure (112), sortant de l'optique de l'interféromètre, de la première distance (113) dans l'un des plans au moins partiellement réfléchissants (320).

5. Procédé selon la revendication 1, **caractérisé en ce que** les distances entre les premier et deuxième points sont mesurées dans le premier plan au moins partiellement réfléchissant (320) pivoté du premier angle et une distance d'un troisième point et une distance d'un quatrième point étant mesurées dans l'un des plans au moins partiellement réfléchissants (320) dont l'inclinaison en cours ou résultante a une valeur négative du premier angle, tous les points étant espacés les uns des autres par paires.

6. Procédé selon la revendication 5, **caractérisé en ce que** le premier plan au moins partiellement réfléchissant (320) est pivoté du premier angle sur un premier axe, un deuxième plan au moins partiellement réfléchissant (330) est pivoté d'un deuxième angle sur un deuxième axe non-parallèle au premier afin de mesurer les distances entre les troisième et quatrième points.

7. Procédé selon l'une des revendications 1 à 6, **caractérisé en ce que** le premier point et le deuxième point sont des points d'une même trajectoire commune, notamment plusieurs points de la trajectoire étant mesurés et la trajectoire ayant notamment un rayon de courbure minimum qui est d'au moins 1/7 d'un rayon d'une circonférence d'une surface à mesurer.

8. Procédé selon la revendication 7, **caractérisé en ce qu'**un guidage du faisceau de mesure est commandé à partir des points mesurés de manière à minimiser un écart entre les points mesurés et une trajectoire idéale.

9. Interféromètre (100) à trajet de faisceau, notamment un scanner OCT, ledit interféromètre comprenant un corps de test destiné à étalonner l'interféromètre (100), le corps de test étant disposé dans le trajet de faisceau et comportant au moins un premier plan au moins partiellement réfléchissant (220, 320) destiné à réfléchir au moins partiellement un faisceau de mesure (112) de l'interféromètre (100), **caractérisé en ce qu'**une normale au premier plan au moins partiellement réfléchissant (220) est pivotée d'un premier angle par rapport à un trajet de faisceau incident au plan au moins partiellement réfléchissant, l'au moins un premier plan au moins partiellement réfléchissant (220, 320), l'angle et le faisceau de mesure étant conçus et disposés de telle sorte qu'au moins une partie du faisceau de mesure (112) réfléchi par le premier plan au moins partiellement réfléchissant (220, 320) soit réfléchie ou diffusée dans la direction d'incidence et l'interféromètre (100) disposant d'un miroir pivotant permettant d'orienter le faisceau de mesure (112) vers un système optique, le pivotement du miroir pivotant permettant de déplacer latéralement le faisceau de mesure (112), sortant du système optique, d'une première distance dans le premier plan au moins partiellement réfléchissant (220), le premier plan au moins partiellement réfléchissant (220) pouvant être pivoté par un moteur.

10. Interféromètre (100) selon la revendication 9, **caractérisé en ce que** le premier angle est inférieur à 50 mrad, de préférence inférieur à 20 mrad, de manière particulièrement préférée inférieur à 5 mrad.

11. Interféromètre (100) selon la revendication 9 ou 10, **caractérisé en ce que** le corps de test comporte un axe de trajet de faisceau destiné au faisceau de mesure (112) de l'interféromètre (100), le corps de test comprenant successivement au moins un premier plan au moins partiellement réfléchissant (320) et un deuxième plan (310) permettant de réfléchir au moins partiellement le faisceau de mesure (112) de l'interféromètre (100) et le premier plan au moins partiellement réfléchissant (320) destiné au faisceau de mesure (112) étant partiellement transmissible des deux côtés et une normale à au moins un des plans (310, 320, 330, 340) pivotant d'un premier angle par rapport à l'axe du trajet de faisceau.

12. Interféromètre (100) selon la revendication 11, **caractérisé en ce que** le corps de test comprend en outre des troisième et quatrième plans (330, 340) réfléchissant partiellement le faisceau de mesure (112), les deuxième et troisième plans (310, 330) destinés au faisceau de mesure (112) étant partiellement transmissibles des deux côtés et les premier, deuxième, troisième et quatrième plans (310, 320, 330, 340) étant situés les uns derrière les autres sur l'axe du trajet de faisceau.

13. Interféromètre (100) selon l'une des revendications 11 ou 12, **caractérisé en ce qu'**une première normale au premier plan au moins partiellement réfléchissant (310) et une deuxième normale au deuxième plan (320) se coupent, et une troisième normale au troisième plan (330) et une quatrième normale au quatrième plan (340) se coupent.

14. Interféromètre (100) selon l'une des revendications 11 à 13, **caractérisé en ce que** les premier et deuxième plans (310, 320) pivotent sur un premier axe et les troisième et quatrième plans (330, 340) pivotent sur un deuxième axe, les premier et deuxième axes étant différents, notamment espacés et non parallèles.

15. Interféromètre (100) selon l'une des revendications 11 à 14, **caractérisé en ce que** l'au moins un plan au moins partiellement réfléchissant (310, 320, 330, 340) est conçu pour être partiellement transparent sous forme d'une plaque de verre ou d'un miroir destiné(e) au faisceau de mesure (112).

16. Interféromètre (100) à trajet de faisceau, notamment un scanner OCT, ledit interféromètre comprenant un corps de test destiné à étalonner l'interféromètre (100), le corps de test étant disposé dans le trajet de faisceau et comportant au moins un premier plan au moins partiellement réfléchissant (220, 320) destiné à réfléchir au moins partiellement un faisceau de mesure (112) de l'interféromètre (100), **caractérisé en ce qu'**une normale au premier plan au moins partiellement réfléchissant (220) est pivotée d'un premier angle par rapport à un trajet de faisceau incident au plan au moins partiellement réfléchissant, l'au moins un premier plan au moins partiellement réfléchissant (220, 320), l'angle et le faisceau de mesure étant conçus et disposés de telle sorte qu'au moins une partie du faisceau de mesure (112) réfléchi par le premier plan au moins partiellement réfléchissant (220, 320) est réfléchie ou diffusée dans la direction d'incidence et l'interféromètre (100) comportant un miroir pivotant permettant d'orienter le faisceau de mesure (112) vers un système optique, le pivotement du miroir pivotant permettant de déplacer latéralement le faisceau de mesure (112), sortant du système optique, d'une première distance dans le premier plan au moins partiellement réfléchissant (220), un deuxième plan (223) étant prévu qui est destiné à réfléchir le faisceau de mesure (112) qui est pivoté vers le premier plan au moins partiellement réfléchissant (220).

**Fig. 1**

**Fig. 2**

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2633797 A1
- EP 2479546 A1
- JP 2014190800 A

### In der Beschreibung aufgeführte Nicht-Patentliteratur

- **VON MINGTAO ZHAO.** 3D refraction correction and extraction of clinical parameters from spectral domain optical coherence tomography of the cornea. Optics Express, 26. April 2010, vol. 18
- Optical coherence tomography for quantitative surface topography. **SERGIO ORTIZ.** Applied Optics. 10. Dezember 2009, vol. 48